**Europäisches Patentamt**

**European Patent Office**

**Office européen des brevets**

(11) Veröffentlichungsnummer : **0 121 042**
**B1**

(12)

# EUROPÄISCHE PATENTSCHRIFT

(45) Veröffentlichungstag der Patentschrift :
29.07.87

(51) Int. Cl.⁴ : **C 01 B 21/04**, B 01 D 53/04

(21) Anmeldenummer : **84100647.1**

(22) Anmeldetag : **21.01.84**

(54) Verfahren zur Gewinnung von Stickstoff.

(30) Priorität : **07.03.83 DE 3307974**

(43) Veröffentlichungstag der Anmeldung :
**10.10.84 Patentblatt 84/41**

(45) Bekanntmachung des Hinweises auf die Patenterteilung : **29.07.87 Patentblatt 87/31**

(84) Benannte Vertragsstaaten :
**DE FR GB IT NL**

(56) Entgegenhaltungen : .
**GB-A- 2 025 254**
**US-A- 4 256 469**
**Die Akte enthält technische Angaben, die nach dem Eingang der Anmeldung eingereicht wurden und die nicht in dieser Patentschrift enthalten sind.**

(73) Patentinhaber : **Bergwerksverband GmbH**
**Franz-Fischer-Weg 61**
**D-4300 Essen 13 (DE)**

(72) Erfinder : **Knoblauch, Karl, Dr.**
**Semperstrasse 55**
**D-4300 Essen 1 (DE)**
Erfinder : **Heimbach, Heinz**
**Zahnrad 38**
**D-4300 Essen-Heidhausen (DE)**
Erfinder : **Harder, Burkhard, Dr.**
**Am Barchembach 12**
**D-4200 Oberhausen (DE)**

## Beschreibung

Die Erfindung betrifft ein Verfahren zur absorptiven Trennung von neben Stickstoff wenigstens Sauerstoff enthaltenden Gasgemischen durch abwechselndes Beladen und Entladen kohlenstoffhaltiger Molekularsiebe gemäss dem Oberbegriff des Anspruchs.

Zum Stand der Technik wird auf die GB-A-2 025 254 und auf die US-A-4 256 469 verwiesen.

Bei der Gewinnung von Stickstoff wird das Verfahren im allgemeinen in der Weise durchgeführt, dass Kohlenstoffmolekularsiebe von den Gasgemischen so lange durchströmt werden, bis im Produktgas ein unerwünscht hoher Sauerstoffgehalt festgestellt wird. Hierbei kann man einem Durchbruch von Gasen mit höherem Sauerstoffgehalt dadurch begegnen, dass man das Beladen des Kohlenstoffmolekularsiebes ganz oder teilweise mit gegenüber dem Ausgangsgas an Stickstoff angereicherten Gasen vornimmt. Derartige Gase stellen z. B. die Restgase dar, die sich am Ende einer Beladung im Zwischenkornraum befinden und die man durch Druckausgleich mit dem evakuierten Reaktor in diesen überführen kann. Dies führt dazu, dass eine Anfangsbeladung mit an Stickstoff angereicherten Gasen im Reaktor herbeigeführt wird.

Der Erfindung liegt die Aufgabe zugrunde, die Anreicherung von Stickstoff beim einstufigen Verfahren in zwei Adsorbern soweit zu verbessern, dass ein Stickstoff mit hoher Reinheit bei einer Restverunreinigung mit Sauerstoff im Bereich von 10-1.000 ppm im Produktgas erzielt wird.

Diese Aufgabe wird erfindungsgemäss durch eine Verkürzung der Druckausgleichszeit auf 0,3-0,7 s bei konstanter Produktgasmenge gelöst.

Es wurde nämlich gefunden, dass bei einer ungedrosselten Entspannung der Gase während des Druckausgleichs zu Anfang ein Gas mit in etwa Produktgasqualität und mit fortschreitendem Druckausgleich ein Gas mit einer (in Vergleich zu Produktgas) wesentlich höheren Sauerstoffkonzentration den unter Druck stehenden Adsorber verlässt. Fraktioniert man nun durch Verkürzung der Druckausgleichszeit dieses Gas in einen Teil mit in etwa Produktgasqualität und benutzt diesen für den Druckaufbau und verwirft den zweiten Teil, so sinkt die mittlere Produktgaskonzentration, wenn die Gasmenge der zweiten Fraktion im Vergleich zur ersten klein ist und einen wesentlich höheren Gehalt an Sauerstoff aufweist; Das fehlende Gasvolumen muss jedoch beim Druckaufbau auf Prozessdruck durch Erhöhung der eingesetzten Luftmenge wieder ausgeglichen werden, wodurch die Produktgasmenge mit abnehmender Druckausgleichszeit konstant bleibt. So wurde beispeilsweise festgestellt, dass bei einer konstanten Produktgasmenge eine Verkürzung der Druckausgleichszeit von 1,5-2,5 s auf 0,4-0,6 s im Produktgas eine Verringerung der Sauerstoffkonzentration im Mittel von beispielsweise 1.000 ppm bei 26 Nm³/h auf 800 ppm ergibt.

Das erfindungsgemässe Verfahren sei anhand der Zeichnung näher erläutert. Es zeigen

Figur 1 eine Anlage zur Durchführung des Verfahrens

Figur 2 die Abhängigkeit der O₂-Konzentration des Druckausgleichsgases und des Druckausgleichsvolumens von der Druckausgleichszeit.

Figur 3 die Stickstoffreinheit in Abhängigkeit von der Druckausgleichszeit.

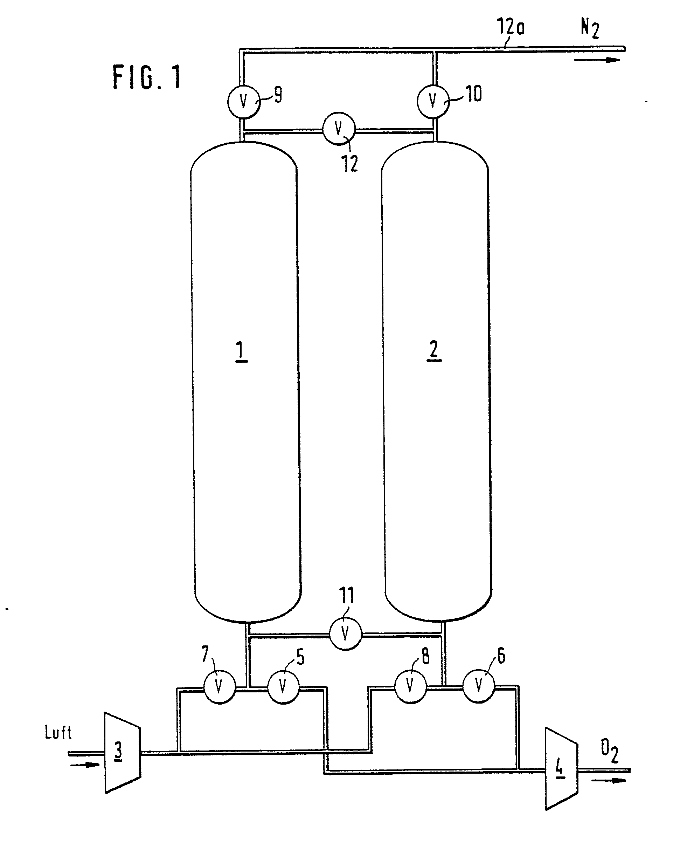

Gemäss Fig. 1 arbeitet die Anlage zur kontinuierlichen Durchführung des Verfahrens mit zwei parallel geschalteten Reaktoren, die in einem zeitlich zueinander verschobenen Rhythmus beladen und entladen werden.

Die Reaktoren 1 und 2 sind mit je 400 l Molekularsiebkoks gefüllt. Sie stehen am Kopf und am Fuss über die Ventile 11 und 12 direkt miteinander in verbindung. Das Produktgas (Stickstoff) wird über die Ventile 9 und 10 durch die Leitung 12a aus den Reaktoren abgeführt. Die Einleitung des Ausgangsgases — im vorliegenden Fall Luft — erfolgt über das Gebläse 3, sowie die Ventile 7 und 8 in die Reaktoren 1 und 2. Die Abführung der Desorptionsgase (Sauerstoff) erfolgt aus Reaktor 1 über Ventil 5 und Reaktor 2 über Ventil 6 mit Hilfe der Vakuumpumpe 4. Der Betrieb dieser Anlage verläuft, nachdem sie bereits in Gang gesetzt worden ist, wie folgt :

In den Adsorber 1 leitet man über das Gebläse 3 und das Ventil 7 auf einen Druck von 3,5 bar kompromierte Luft ein. Der Luftstrom beträgt 160 m³/h. Nach einer Druckaufbauzeit von 4,5 s verlässt Stickstoff mit einer mittleren Reinheit von 800 ppm Restsauerstoff über Ventil 9 den Reaktor 1. Der Druck des abströmenden Stickstoffs steigt in der 55 s dauernden Produktionsphase von 2 bar auf 2,5 bar an. Die Produktionsrate beträgt 26 m³N₂/h (i.N.).

Im Anschluss an die Produktionsphase findet ein Druckausgleich über eine Zeitspanne von 0,5 s statt. Hierbei sind die Reaktoren 1 und 2 über die Ventile 11 und 12 am Fuss und Kopf der Reaktoren miteinander verbunden.

Danach beginnt der nächste Halbzyklus, indem Luft über Ventil 8 in den Reaktor 2 einströmt, wobei sich der Druck in der Druckaufbauzeit von 4,5 s von etwa 1,3 bar auf 2,0 bar erhöht. Daran schliesst sich wieder die Produktionsphase von 55 s Dauer wie beim Reaktor 1 beschrieben an.

Zur Regeneration wird der Reaktor 1 in der Druckaufbauphase und der Produktionsphase des Reaktors 2 auf Unterdruck über Ventil 5 für eine Zeitspanne von 59,5 s evakuiert, bis dann wieder ein erneuter Druckausgleich von 0,5 s Dauer zwischen den Reaktoren 1 und 2 stattfindet und der Reaktor 1 mit Luft beaufschlagt wird.

Bei der Entspannung werden 134 m³/h (i.N.) Gas mit einem mittleren Sauerstoffgehalt von 34 % abgesaugt. Mit diesem Gas werden gleichzeitig die übrigen adsorbierten Luftbestandteile, wie Wasserdampf und CO₂ abgesaugt.

In einer anderen Verfahrensvariante ist die in Fig. 1 dargestellte Apparatur anstelle des Gebläses 3 mit einem Kompressor und ohne die Vakuummaschine 4 ausgerüstet. Die Reaktoren 1 und 2 sind mit 500 I Kohlenstoffmolekularsieb gefüllt. Der Betrieb der Anlage erfolgt in der gleichen Weise und mit den gleichen Zyklenzeiten wie im vorangegangenen Beispiel mit dem Unterschied, dass nunmehr über Kompressor 3 auf einen Druck von 8 bar komprimierte Luft in die Adsorber eintritt : Der Luftstrom beträgt 250 m³/h (i.N.). Der Druck des abströmenden Stickstoffs steigt während der Produktionsphase von 5,5 bar auf 8 bar an. Die Produktionsrate beträgt 30 m³N₂/h (i.N.) mit einem Gehalt von 800 ppm Sauerstoff. Innerhalb der Druckaufbauzeit steigt jetzt der Druck von etwa 3 bar auf 5,5 bar an. Bei der Entspannung werden 220 m³/h (i.N.) Gas mit einer mittleren Sauerstoffkonzentration von 29 % gegen Atmosphärendruck ungedrosselt abgeströmt.

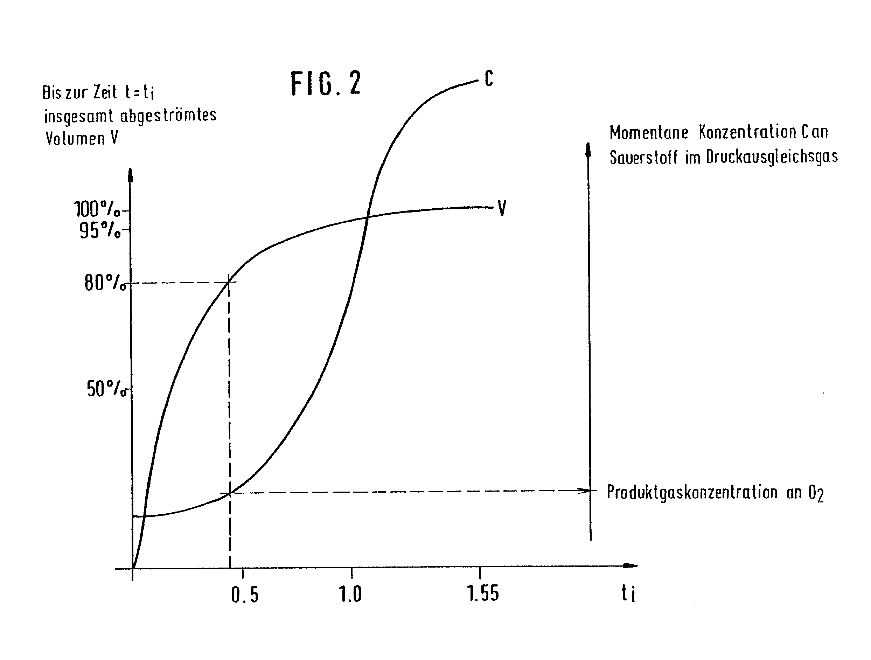

In Fig. 2 ist der qualitative Zusammenhang zwischen der O₂-Konzentration des Druckausgleichsgases und zwischen dem Druckausgleichsgasvolumen und der Druckausgleichszeit aufgetragen. Man erkennt den steilen Anstieg des integralen Volumenverlaufs, beispielsweise sind bei einer Druckausgleichszeit von 0,5 s etwa 80 % des Druckausgleichsgases bereits abgeströmt. Dagegen steigt die Konzentration an Sauerstoff im Druckausgleichsgas erst im Bereich der Druckausgleichszeit von 0,5-1,5 s steil an.

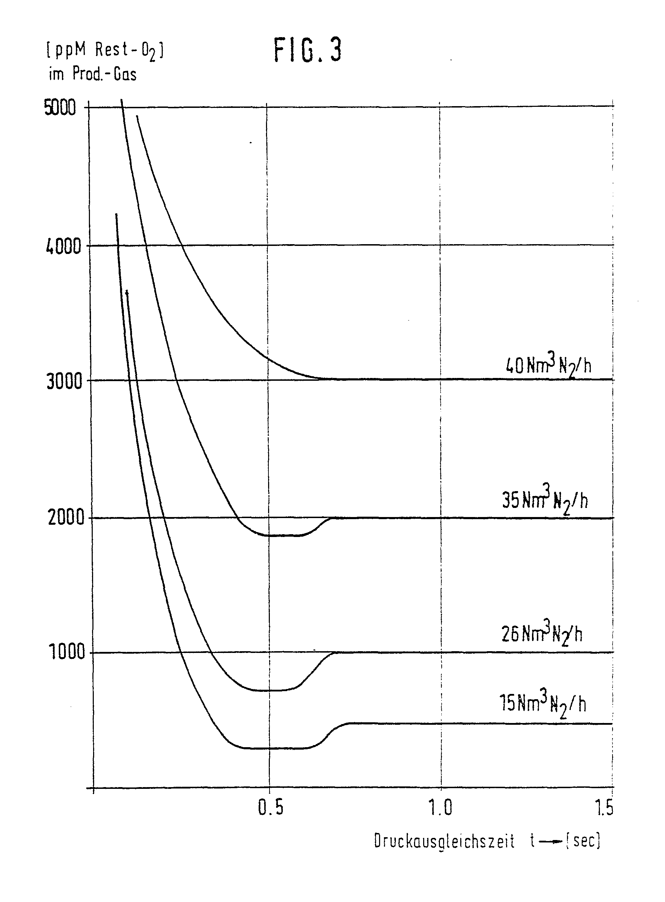

In fig. 3 ist bei konstanter Menge an Kohlenstoffmolekularsieb für verschiedene Produktgasmengen von 15, 26, 35 und 40 m³/h (i.N.) die Produktgasreinheit in Abhängigkeit von der Druckausgleichszeit für das Verfahren dargestellt.

**Patentanspruch**

Verfahren zur Gewinnung von Stickstoff mit einem Restsauerstoffgehalt von 10-1.000 ppm durch adsorptive Trennung von neben Stickstoff wenigstens Sauerstoff enthaltenden Gasgemischen, wie beispielsweise Luft, durch cyclisches Beladen und Entladen von mindestens zwei mit kohlenstoffhaltigen Molekularsieben gefüllten Reaktoren, bei dem das Gasgemisch das Kohlenstoffmolekularsieb unter Gewinnung eines im wesentlichen aus N² bestehenden Produktgases durchströmt, wobei die Durchströmung des Kohlenstoffmolekularsiebes mit stetig bis zum Enddruck ansteigenden Drucken durchgeführt wird und am Ende der Durchströmung des einen Reaktors und der Evakuierung oder Druckabsenkung auf Atmosphärendruck des parallel betriebenen anderen Reaktors das Gas des beladenen Reaktors durch Druckausgleich über die Ein- und Ausströmenden in den entladenen Reaktor abgelassen wird, dadurch gekennzeichnet, dass die Druckausgleichszeit bei konstanter Produktgasmenge zwischen 0,3 und 0,7 s liegt.

**Claim**

A process for obtaining nitrogen with a residual oxygen content of 10-1.000 ppm by the adsorptive separation of gas mixtures — such as for example air — containing, in addition to nitrogen, at least oxygen, by the cyclical charging and discharging of at least two reactors filled with molecular sieves which contain carbon, in which process the gas mixture passes through the carbon molecular sieve, thus producing a product gas which substantially consists of N₂, the passing of the gases through the carbon molecular sieve being carried out under pressures which steadily increase up to the final pressure, the gas of the charged reactor being released by pressure compensation into the discharged reactor via the inflow and outflow ends on completion of the passing-through of one reactor and the evacuation or lowering of pressure to atmospheric pressure of the other reactor, which is operated parallel to the first, characterised in that the pressure compensation time in the case of a constant amount of product gas is between 0.3 and 0.7 s.

**Revendication**

Procédé pour l'obtention d'azote, avec une teneur résiduelle en oxygène de 10-1 000 ppm, par séparation adsorptive de mélanges de gaz contenant au moins de l'oxygène, outre de l'azote, tels que, par exemple, l'air, par charge et décharge cyclique d'au moins deux réacteurs remplis de tamis moléculaires contenant du carbone, conformément auquel le mélange de gaz s'écoule à travers le tamis moléculaire carboné en donnant un gaz de production qui se compose essentiellement de N₂, où l'écoulement à travers le tamis moléculaire carboné se réalise sous des pressions qui croissent constamment jusqu'à la pression finale et, à la fin de l'écoulement à travers l'un des réacteurs et la mise sous vide ou la réduction de pression jusqu'à la pression atmosphérique de l'autre réacteur exploité en parallèle, on admet le gaz du réacteur chargé par équilibrage de pression et en passant par les extrémités d'entrée et de sortie dans le réacteur déchargé, caractérisé en ce que la durée d'équilibrage de la pression varie de 0,3 à 0,7 s à quantité de gaz de production constante.

FIG. 1

**FIG. 2**

Bis zur Zeit t=t_i
insgesamt abgeströmtes
Volumen V

100%
95%
80%
50%

C

V

0.5   1.0   1.55   $t_i$

Momentane Konzentration C an
Sauerstoff im Druckausgleichsgas

Produktgaskonzentration an $O_2$

## FIG. 3

[ppM Rest-$O_2$]
im Prod.-Gas

40 Nm$^3$ N$_2$/h

35 Nm$^3$ N$_2$/h

26 Nm$^3$ N$_2$/h

15 Nm$^3$ N$_2$/h

Druckausgleichszeit  t ⟶ [sec]